# EUROPÄISCHE PATENTSCHRIFT

(11) **EP 1 905 723 B1**
(45) Veröffentlichungstag und Bekanntmachung des Hinweises auf die Patenterteilung: **16.11.2011**
(21) Anmeldenummer: 07117279.5
(22) Anmeldetag: 26.09.2007
(51) Int. Cl.: B66D 3/18, H02G 5/02

(54) **Hebevorrichtung für die Montage von Stromschienen**
Lifting device for assembling conductor rails
Dispositif de levage pour le montage de rails conducteurs

(30) Priorität: 30.09.2006 CH 15512006
(43) Veröffentlichungstag der Anmeldung: 02.04.2008
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A- 1 589 627
- DE-A1- 4 418 354
- DE-A1- 19 508 969

## Beschreibung

Die Erfindung betrifft eine Hebevorrichtung für die Montage von Stromschienen nach dem Oberbegriff des Patentanspruchs 1.

Stromschienen und Vorrichtungen zu deren Montage sind beispielsweise aus [1], Produktkatalog "Niederspannungs-Schienenverteiler LANZ HE 2.5.2" der LANZ OENSINGEN AG vom März 2000 bekannt. Möglich ist ferner die Verwendung von Montagevorrichtungen, die aus [2], "MULTIFIX" Produktkatalog der LANZ OENSINGEN AG vom August 2001 bekannt sind.

Stromschienen werden als Übertragungsleitungen zwischen Transformator oder Notstromgenerator sowie Haupt- und Unterverteilern in Gebäuden oder Anlagen verwendet, in denen grosse Ströme zu übertragen sind. Typischerweise werden Stromschienen in Fabrikhallen, Gewerbe- und Verwaltungsgebäuden oder auch als Steigleitungen in Hochbauten eingesetzt.

Zur Minimierung von durch den Skineffekt verursachten Verlusten werden normalerweise Stromschienen mit mehreren, allgemein n mal m Kupfer- oder Aluminium-Leitern verwendet, die einen rechteckigen Querschnitt mit hohem Unterschied von Länge und Breite aufweisen. Einzelne Stromschienen-Elemente, die beispielsweise in Giessharz (Polymerbeton) vergossen oder in Blech gekapselt sind, können dabei ein Gewicht von bis zu 400 kg und mehr aufweisen.

Zur Verbindung der einzelnen Stromschienen-Elemente sind Kupplungen verwendbar, wie sie in [1], Seite 9 beschrieben sind. Durch diese Kupplungen werden die elektrische und die mechanische Kopplung der Stromschienen-Elemente realisiert.

Die Installation von Leitungen, Einrichtungen und Geräten am und im Baukörper wird traditionellerweise Baustellen-Monteuren überlassen, welche normalerweise nicht auf die Installation von Stromschienen spezialisiert sind und fallweise die benötigten Befestigungs- und Montagemittel beschaffen. Zum Anheben von schweren Stromschienen mit einem Gewicht von über 100 kg wird normalerweise Hebezeug verwendet. Dabei besteht oft das Problem, dass diese Hebevorrichtungen ungenügend dimensioniert, umständlich einzusetzen oder mit den Stromschienen zu beladen sind.

Beispielsweise werden Gabelstapler verwendet, mittels derer eine schwere Stromschiene angehoben und anschliessend von der Liftgabel auf eine Auflagefläche einer Befestigungsvorrichtung, z.B. auf eine Wandkonsole oder auf einen an einer Deckenstütze vorgesehenen Ausleger umgeladen wird. Dieser Umladevorgang ist nach dem Anheben der Stromschienen schwierig durchzuführen und stellt meist ein Sicherheitsrisiko dar. Eine rasche, effiziente und sichere Installation der Stromschienen ist mit den bekannten Hebezeugen kaum möglich. Ferner ist bei bekannten Befestigungs- und Hebevorrichtungen der Umladevorgang nur möglich, wenn ein relativ grosser Abstand zur Decke vorhanden ist. Oft gelingt es zudem nicht, die Stromschienen relativ nahe unter Decken zu montieren.

Die bei der Installation von Stromschienen entstehenden Probleme werden oft unterschätzt. Zu berücksichtigen ist, dass Stromschienen kurze, relativ dicke (z.B. 10 mm) und hohe (z.B. 25 cm) Anschlusslaschen aufweisen, die mit engen Toleranzen gefertigt sind, und die zwischen den Anschlusslaschen wenig Spielraum haben. Die gegenseitige Kopplung von Stromschienen erfordert Präzisionsarbeit. Bei der Installation der Stromschienen treten somit selbst bei Verwendung bisher empfohlener Befestigungsvorrichtungen (siehe [1], Seiten 10 und 11) Probleme auf.

Aus [3], EP 1 589 627 ist die nachstehend in Figur 1 gezeigte Hebevorrichtung für Stromschienen gemäß dem Oberbegriff des Anspruchs 1 bekannt, mittels der schwere Stromschienen in Deckennähe einfach und sicher in einer Befestigungsvorrichtung montierbar sind, welche eine mit der Decke verbundene Haltevorrichtung und ein zum Tragen wenigstens einer Stromschiene dienendes Tragelement aufweist. Das Tragelement ist derart an der Unterseite der Haltevorrichtung montierbar und demontierbar, dass die zu installierende Stromschiene senkrecht von unten in die Haltevorrichtung einführbar und das Tragelement nach dem Einführen der Stromschiene mit der Haltevorrichtung verbindbar und die eingeführte Stromschiene anschliessend wieder senkrecht auf das Tragelement absenkbar ist. Die schweren Stromschienen lassen sich von unten senkrecht mittels der in [3] beschriebenen Hebevorrichtung in die Haltevorrichtung einführen und, im Anschluss daran, auf das eingesetzte Tragelement absenken. Ein normalerweise mit Schwierigkeiten verbundener seitlicher Umladevorgang der Stromschienen entfällt.

Die Haltevorrichtung weist vorzugsweise ein mit der Decke verbindbares erstes Profilteil, und wenigstens ein vorzugsweise senkrecht darunter hängendes zweites Profilteil auf, das mit Öffnungen versehen ist, welche erlauben, das Tragelement seitlich daran zu befestigen. Das zweite Profilteil kann ferner ein Gewinde aufweisen, das durch eine Öffnung im Tragelement durchführbar und mit einer Schraubenmutter verbindbar ist. Das Tragelement kann nach dem Einführen der Stromschienen somit rasch und bequem montiert werden. Das Tragelement, das vorzugsweise aus zwei gegeneinander justierbaren Teilen besteht, kann nur an einem oder auch an zwei zweiten Profilteilen befestigt werden. Nach der Installation der Stromschienen können diese, beispielsweise mittels zwei Schrauben, bezüglich der Höhe und der Neigung justiert werden, um eine präzise gegenseitige Ausrichtung von miteinander zu verbindenden Stromschienen zu erzielen. Ferner können zwei und mehr zweite Profilteile vorgesehen werden, zwischen denen Stromschienen installiert werden.

Die in [3] beschriebene Haltevorrichtung ist mit Montageelementen versehen, die mit wenigstens einem Zugelement - einem Seil oder einer Kette - der Hebevorrichtung verbindbar sind, mittels der die Stromschienen angehoben werden. Die manuell oder motorisch betriebene Hebevorrichtung weist eine der Aufnahme einer Stromschiene dienende Tragvorrichtung auf, die beidseitig mittels eines durchlaufenden Zugelements oder die beidseitig je mittels eines einzelnen Zugelements mit Montageelementen der Haltevorrichtung verbindbar und mittels des oder der Zugelemente derart hochziehbar ist, dass die gehaltene Stromschiene in die Haltevorrichtung einziehbar und mittels des Tragelements arretierbar ist.

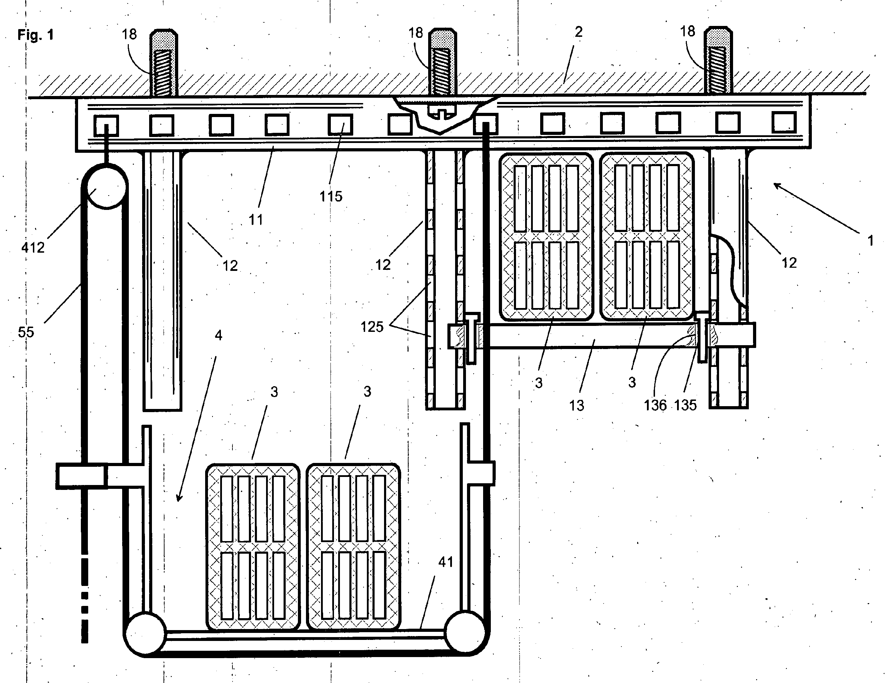

Die Anordnung und Montage eines durchlaufenden Zugelements (siehe Figur 1 nachstehend) oder von einzelnen Zugelementen beidseits der Tragvorrichtung sowie die entsprechende Ausgestaltung der Tragvorrichtung selbst ist jedoch mit einem Aufwand verbunden, der bloss beim Verlegen von Stromschienen gleicher Länge in grosser Anzahl gerechtfertigt ist. Für Fälle, in denen Stromschienen verschiedener Länge bzw. nur in geringer Anzahl verlegt oder bei Anpassungen oder Reparaturen vereinzelt ausgewechselt werden müssen, wäre es hingegen wünschenswert, eine kostengünstigere und einfacher handhabbare Hebevorrichtung zu haben.

Der Erfindung liegt daher die Aufgabe zugrunde, die aus [3] bekannte Hebevorrichtung zu vereinfachen, d.h. eine kostengünstigere und einfacher handhabbare Hebevorrichtung zu schaffen.

Diese Aufgabe wird mit einer Hebevorrichtung gelöst, welche die in Anspruch 1 angegebenen Merkmale aufweist. Vorteilhafte Ausgestaltungen der Erfindung sind in weiteren Ansprüchen angegeben.

Die manuell oder motorisch betriebene Hebevorrichtung, die der Installation von Stromschiene in einer Befestigungsvorrichtung dient, welche aus einer mit der Decke eines Gebäudes verbindbaren Haltevorrichtung und aus einem dem Tragen wenigstens einer Stromschiene dienenden Tragelement besteht, weist eine Antriebsvorrichtung mit einem damit anziehbaren Zugelement auf, mittels dessen eine damit gehaltene Stromschiene gegen die Haltevorrichtung gezogen werden kann.

Erfindungsgemäss ist an der Haltevorrichtung ein Kopfstück vorgesehen, das mittels Verbindungselementen mit der Befestigungsvorrichtung verbindbar ist und das wenigstens eine Umlenkrolle aufweist, über die das Zugelement umlenkbar ist. Ferner ist wenigstens eine mit der Antriebsvorrichtung und dem Kopfstück verbundene Hilfsvorrichtung vorgesehen, mittels der die beim Anheben der Stromschiene über das Zugelement auf die Antriebsvorrichtung einwirkende Kraft kompensierbar ist.

Die erfindungsgemässe Hebevorrichtung ist daher vergleichsweise einfach ausgestaltet und kann einfach bedient werden.

Normalerweise werden jeweils zwei gleiche erfindungsgemässe Hebevorrichtungen zur Montage eines Stromschienen-Elements eingesetzt, d.h. an jedem Endstück des Stromschienen-Elements wird eine Hebevorrichtung angebracht, um das Stromschienen-Element hochzuziehen und zu nivellieren. In der Folge wird die Funktionsweise nur einer Hebevorrichtung beschrieben.

Zum Einrichten der Hebevorrichtung wird deren Kopfstück, welches mit der wenigstens einen Umlenkrolle versehen ist, mit einem vorzugsweise gelochten Profilstück der Befestigungsvorrichtung verbunden. Anschliessend wird das ausgehend von der Antriebsvorrichtung über die Umlenkrolle geführte Zugelement, beispielsweise ein Seil oder eine Kette, mit der zu installierenden Stromschiene oder mit einer zum Halten oder Tragen der Stromschiene dienenden Tragvorrichtung verbunden.

Mit der Antriebsvorrichtung kann das Zugelement nun angezogen und die Stromschiene in eine gewünschte Position angehoben werden. Die durch die Stromschiene über das Zugelement auf die Antriebsvorrichtung einwirkende Kraft wird durch die Hilfsvorrichtung kompensiert, welche beispielsweise ein längliches metallisches Rohr ist, das durch Montagemittel einerseits mit dem Kopfstück und andererseits mit der Antriebsvorrichtung fest, oder gelenkig und mittels eines an der Hilfsvorrichtung oder am Kopfstück vorgesehenen Halteelements fixierbar verbunden ist.

Diese Hilfsvorrichtung dient in einer vorzugsweisen Ausgestaltung nicht nur der Kraftkompensation, sondern erlaubt eine besonders einfache Verbindung des Kopfstücks mit der Befestigungsvorrichtung. Das Kopfstück kann mittels der Hilfsvorrichtung angehoben und mit der in der Nähe der Decke befindlichen Befestigungsvorrichtung verbunden werden. Die Hilfsvorrichtung kann eine rechteckige oder runde Profilschiene, vorzugsweise ein der Durchführung des Zugelements dienendes Hohlprofil sein. Besonders vorteilhaft ist eine teleskopartig ausziehbare und blockierbare Hilfsvorrichtung aus Rohren, mittels der die Hebevorrichtung rasch an unterschiedliche Raumhöhen angepasst bzw. vor und nach Gebrauch mit nur geringem Raumbedarf gelagert werden kann.

Das Kopfstück kann auf verschiedene Weise mit der Befestigungsvorrichtung verbunden werden. Beispielsweise wird das Kopfstück mit vorzugsweise zwei stab- oder hakenförmigen Verbindungselementen versehen, die je durch wenigstens eine Öffnung eines Profilstücks der Befestigungsvorrichtung durchführbar sind. Gelochte Profilstücke dieser Art sind kostengünstig erhältlich. Das Kopfstück kann alternativ mit einem Kopplungselement versehen sein, welches mit einem dazu korrespondierenden Kopplungselement der Befestigungsvorrichtung koppelbar ist, welches an einem entsprechend ausgestalteten Profilstück vorgesehen ist.

Sofern das Kopfstück mit stabförmigen Verbindungselementen versehen ist, können diese besonders einfach in die Öffnungen, gegebenenfalls durch je zwei Öffnungen am Profilstück hindurch geführt werden. Damit die Verbindungselemente nun nicht wieder selbsttätig aus den Öffnungen herausgleiten, sind sie je mit wenigstens einer Ausnehmung versehen, in die hinein der Rand der zugehörigen Öffnung des Profilstücks einsenkbar ist. Durch das Eigengewicht des Kopfstücks und insbesondere durch das Gewicht der angehängten Stromschiene werden die Verbindungselemente innerhalb des Profilstücks automatisch fixiert und können erst nach der Entlastung des Zugelements durch leichtes Anheben des Kopfstücks wieder gelöst werden.

In einer weiteren vorzugsweisen Ausgestaltung weist das Kopfstück ein erstes mit der Befestigungsvorrichtung verbindbares, und ein zweites mit der Umlenkrolle versehenes Teil auf, die mit Kopplungselementen versehen sind. Durch diese Massnahme können die einzelnen Teile in zwei Schritten besonders einfach montiert werden. Besonders vorteilhaft ist diese Ausgestaltung des Kopfstücks, wenn die Kopplungselemente in belastetem oder unbelastetem Zustand seitlich gegeneinander verschiebbar sind, um die Stromschienen in die Montageposition zu justieren oder um die angehobene Stromschiene seitlich, gegebenenfalls über einen Ausleger, in die Montageposition zu fahren. Die Kopplungselemente können dazu mit Rollen oder Gleitelementen versehen sein.

Nachfolgend wird die Erfindung, einschliesslich weiterer vorzugsweiser Ausgestaltungen anhand von Zeichnungen näher erläutert. Dabei zeigt:
- Figur 1: eine bekannte Hebevorrichtung 4, mittels der Stromschienen 3 zu einer deckenseitig montierten Befestigungsvorrichtung 1 angehoben und dort auf ein nachträglich eingesetztes Tragelement 13 abgesetzt werden können;
- Figur 2 a-c: eine erfindungsgemässe Hebevorrichtung 5, die aus einer Antriebsvorrichtung 51, einer Hilfsvorrichtung 52, einem Kopfstück 53 und einem Zugelement 55 besteht;
- Figur 3: die mit der Befestigungsvorrichtung 1 von Figur 1 verbundene Hebevorrichtung 5 von Figur 2 während des Anhebens von zwei Stromschienen 3;
- Figur 4: die Hebevorrichtung 5 von Figur 3 mit den Stromschienen 3 in der Installationshöhe, unmittelbar nach dem Einsetzen des Tragelements 13 in die Befestigungsvorrichtung 1;
- Figur 5: die Hebevorrichtung 5 von Figur 3 mit einer vorzugsweise elektrischen Antriebsvorrichtung 51, mittels der das Zugelement 55 angezogen, jedoch nicht auf eine Rolle aufgewickelt wird;
- Figur 6 a, b: die Verbindung eines vorteilhaft ausgestalteten Kopfstücks 53 mit einem Profilstück 11 der Befestigungsvorrichtung 1; und
- Figur 7 a-c: ein aus zwei Teilen 531A und 531B bestehendes, seitlich verschiebbares Kopfstück 53.

Figur 1 zeigt eine aus [3] bekannte Befestigungsvorrichtung 1, die im Wesentlichen eine Haltevorrichtung 11, 12 mit einem mittels Schrauben 18 mit der Decke 2 eines Gebäudes verbundenen ersten Profilteil 11 und zwei zweiten Profilteilen 12 aufweist, die mit dem ersten Profilteil 11 verbunden und senkrecht dazu ausgerichtet sind.

Figur 1 zeigt ferner eine ebenfalls aus [3] bekannte Hebevorrichtung 4, mittels der Stromschienen 3 zwischen den beiden senkrecht ausgerichteten Profilteilen 12 angehoben und dort auf ein nachträglich in die Öffnungen 125 der Profilteile 12 eingesetztes Tragelement 13 abgesetzt werden können.

Das erste Profilteil 11 ist mit mehreren Öffnungen 115 versehen, wie sie typischerweise in Profilteile dieser Art eingestanzt werden. An einer Seite der Befestigungsvorrichtung 1 ist ein Zugelement 55 einer Hebevorrichtung 4, ein Seil oder eine Kette, fest in einer der Öffnungen 115 gehalten. Auf der anderen Seite der Befestigungsvorrichtung 1 ist das Zugelement 55 mittels einer Rolle 412 gehalten. Das Zugelement 55 dient dabei dem vertikalen Aufziehen und Absenken einer Tragvorrichtung 41, die mit Stromschienen 3 beladbar ist. Nach dem Entfernen des Tragelements 13 von der Befestigungsvorrichtung 1 können die von der Tragvorrichtung 41 gehaltenen Stromschienen 3 durch Ziehen des Zugelements 55 vertikal in die Befestigungsvorrichtung 1 eingefahren werden, wonach das Tragelement 13 montiert und die Stromschienen 3 darauf abgesenkt werden.

Damit die Tragvorrichtung 41 ganz nach oben gefahren werden kann, ist das Zugelement 55 unterhalb der Tragvorrichtung 41 hindurch geführt, so dass diese in einer beidseits mit der Befestigungsvorrichtung 1 verbundenen Schlaufe des Zugelements 55 gehalten ist. Diese bekannte Hebevorrichtung erfordert daher eine besondere Befestigung des Zugelements 55 sowie eine entsprechend ausgestaltete Tragvorrichtung 41.

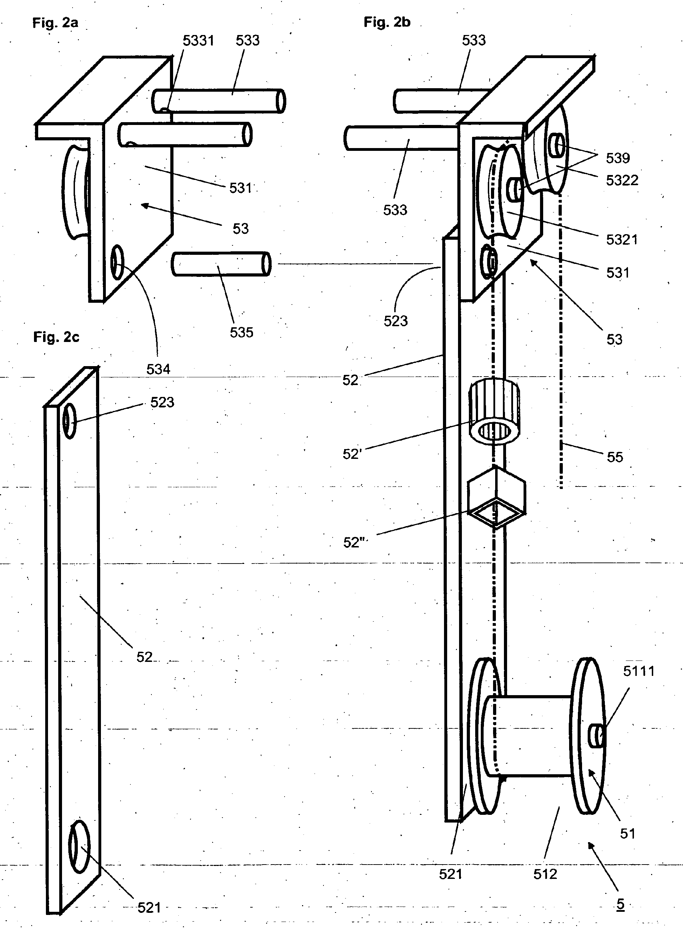

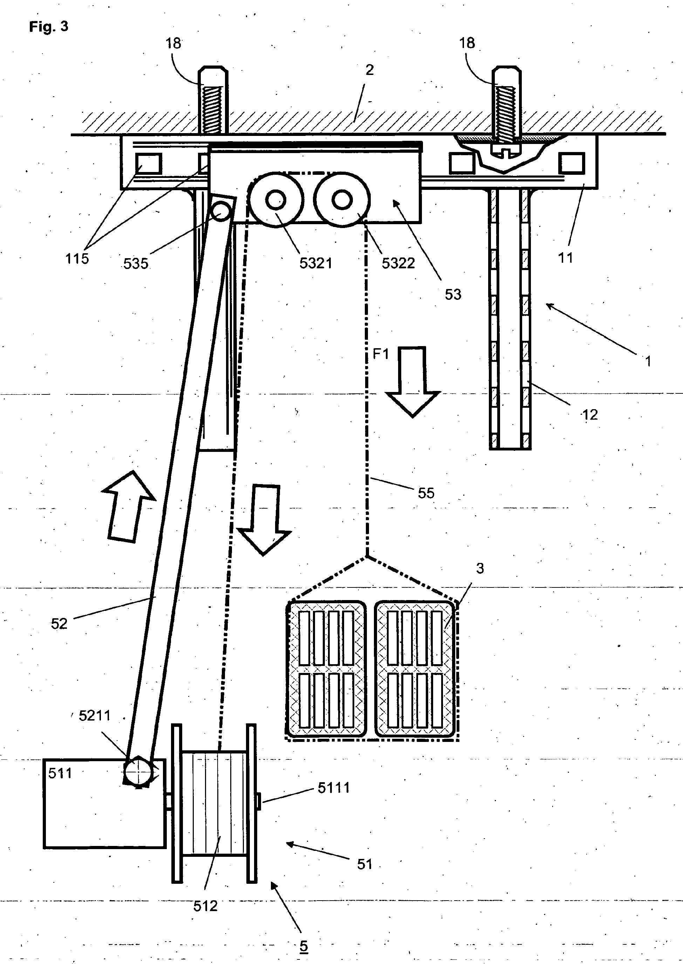

In den in den Figuren 2a-c ist eine beispielsweise Ausgestaltung einer erfindungsgemässe Hebevorrichtung 5 gezeigt, die aus einer Antriebsvorrichtung 51, einem dem Hochziehen der Stromschienen dienenden Zugelement 55, einer Hilfsvorrichtung 52 und einem Kopfstück 53 besteht, das, wie in den Figuren 3 bis 6 gezeigt, mit einer an der Decke 2 eines Raumes, gegebenenfalls in einem Gebäude oder Tunnel montierten Befestigungsvorrichtung 1 verbindbar ist.

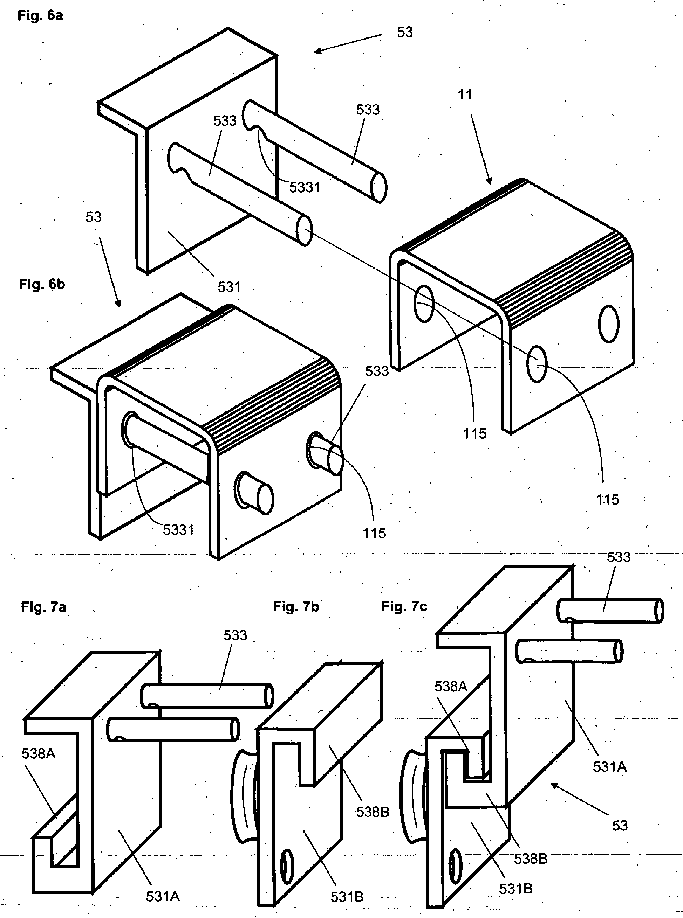

In den Figuren 2a und 2c sowie 7a und 7b ist gezeigt, dass das Kopfstück 53 eine Hauptplatte 531 mit zwei Verbindungselementen 533 aufweist, die in die Öffnungen 115 des vorzugsweise mit der Decke 2 verbundenen ersten Profilteils 11 der Befestigungsvorrichtung 1 einführbar sind. Das Kopfstück 53 kann angehoben und durch Einführen der Verbindungselemente 533 in die Öffnungen 115 des ersten Profilteils 11 mit diesem verbunden werden. Damit sich die Verbindungselemente 533, die je durch zwei benachbarte Öffnungen 115 im ersten Profilteil 11 hindurch treten, sich aus diesen nicht selbsttätig wieder lösen können, sind die Verbindungselemente 533 mit Ausnehmungen 5331 versehen, in die der Rand der ersten Öffnung 115 eindringen können. Nach dem Einführen der Verbindungselemente 533 entsteht automatisch eine formschlüssige Verbindung zwischen den Verbindungselementen 533 und der Befestigungsvorrichtung 1, die nicht gelöst werden kann, solange das Zugelement 55 belastet ist. Unter Last bleibt das Kopfstück 53 daher zuverlässig mit der Befestigungsvorrichtung 1 verbunden.

Die stabförmigen Verbindungselemente 533 können dabei besonders einfach in die Öffnungen 115 des ersten Profilteils 11 eingeführt und, nach Entlastung des Zugelements 55, aus diesen wieder gelöst werden. Alternativ kann das Kopfstück 53 auch mit anders ausgestalteten, beispielsweise hakenförmigen Verbindungselementen 533 versehen sein, welche in die Befestigungsvorrichtung 1 eingehängt werden.

In Figur 2b ist ferner gezeigt, dass das Kopfstück 53 mit zwei Umlenkrollen 5321, 5322 versehen ist, welche mittels Wellen 539 gelagert sind. Über die Umlenkrollen 5321, 5322 ist das Zugelement 55 geführt, dass auf einer Seite von der Antriebsvorrichtung 51 gezogen oder bedarfsweise freigegeben wird. Die Antriebsvorrichtung 51 weist eine Antriebseinheit 511 auf, beispielsweise einen Elektromotor mit Getriebe oder ein manuell betriebenes Kurbelgetriebe, die eine Welle 5111 antreibt, auf der eine Spule 512 sitzt, auf die das Zugelement 55 aufgerollt wird.

Die Antriebsvorrichtung 51 und das Kopfstück 53 sind durch eine Hilfsvorrichtung 52 miteinander verbunden. Das Kopfstück 53 und die plattenförmige Hilfsvorrichtung 52 sind dazu an den einander zugewandten Enden mit Öffnungen 534 bzw. 523 versehen, durch die ein Verbindungsbolzen 535 geführt ist. Auf der unteren Seite ist die Hilfsvorrichtung 52 mit einer weiteren Öffnung 521 versehen, durch die die Welle 5111 der Antriebseinheit 511 hindurch führbar ist. Alternativ kann die Antriebseinheit 511 auch mit einem zylindrischen Flansch versehen sein, welcher praktisch spielfrei in die Öffnung 521 hinein passt und die Hilfsvorrichtung 52 hält.

In einer vorzugsweisen Ausgestaltung ist die mit wenigstens zwei vorzugsweise rohrförmigen Teilen 52', 52" versehene Hilfsvorrichtung 52 teleskopisch ausziehbar und vorzugsweise in beliebigen Längen fixierbar, so dass die Antriebsvorrichtung 51 und das Kopfstück 53 in der Höhe bedarfsweise gegeneinander verschiebbar sind.

Sofern die Hilfsvorrichtung 52 rohrförmig ausgestaltet ist, kann das Zugelement 55 auch innerhalb der Hilfsvorrichtung 52 geführt sein, wie dies in Figur 2b schematisch gezeigt ist.

Figur 3 zeigt die mit der Befestigungsvorrichtung 1 von Figur 1 verbundene Hebevorrichtung 5 von Figur 2 während des Anhebens von zwei Stromschienen 3. Dabei ist gezeigt, dass die Stromschienen 3 eine Kraft F1 über das Zugelement 55 zur Antriebsvorrichtung 51 übertragen, die durch die Kraft kompensiert wird, die durch die Hilfsvorrichtung 52, die in diesem Ausführungsbeispiel mittels einer Schraube 5211 mit der Antriebsvorrichtung 51 verbunden ist, auf diese übertragen wird. Sofern die Hilfsvorrichtung 52 fehlen würde, würde die leichte Antriebsvorrichtung 51 durch die schwereren Stromschienen 3 gegen die Decke 2 gezogen.

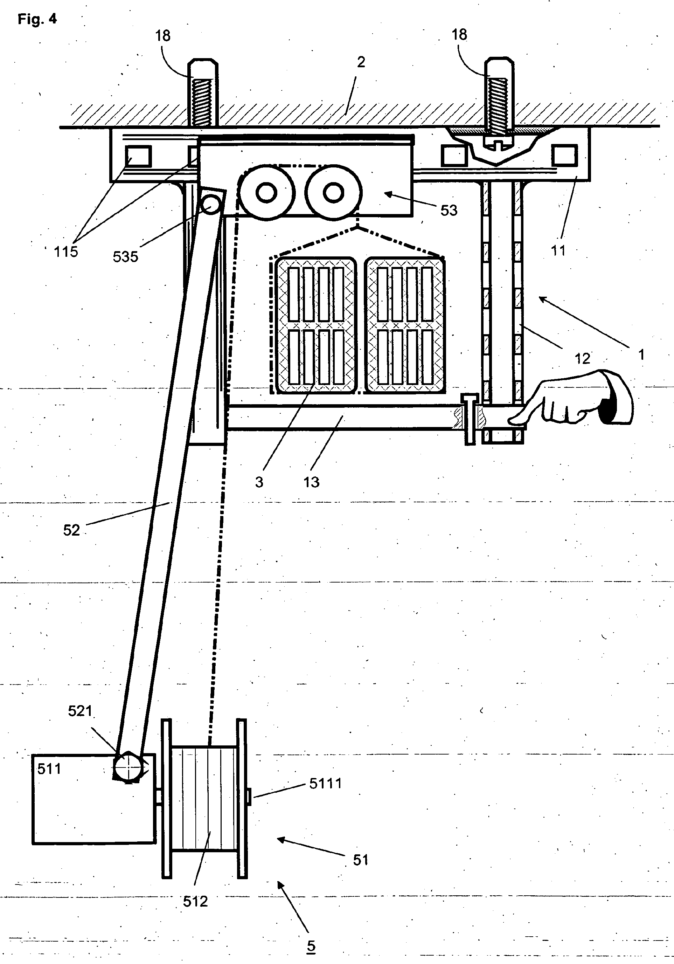

Figur 4 zeigt die Hebevorrichtung 5 von Figur 3 mit den Stromschienen 3 in der Installationshöhe, nach dem Einsetzen des Tragelements 13 in die Befestigungsvorrichtung 1. Nachdem die Stromschienen 3 zwischen die beiden zweiten Profilteile 12 angehoben worden ist, konnte das Tragelement 13 montiert und die Stromschienen 3 anschliessend darauf abgesenkt werden.

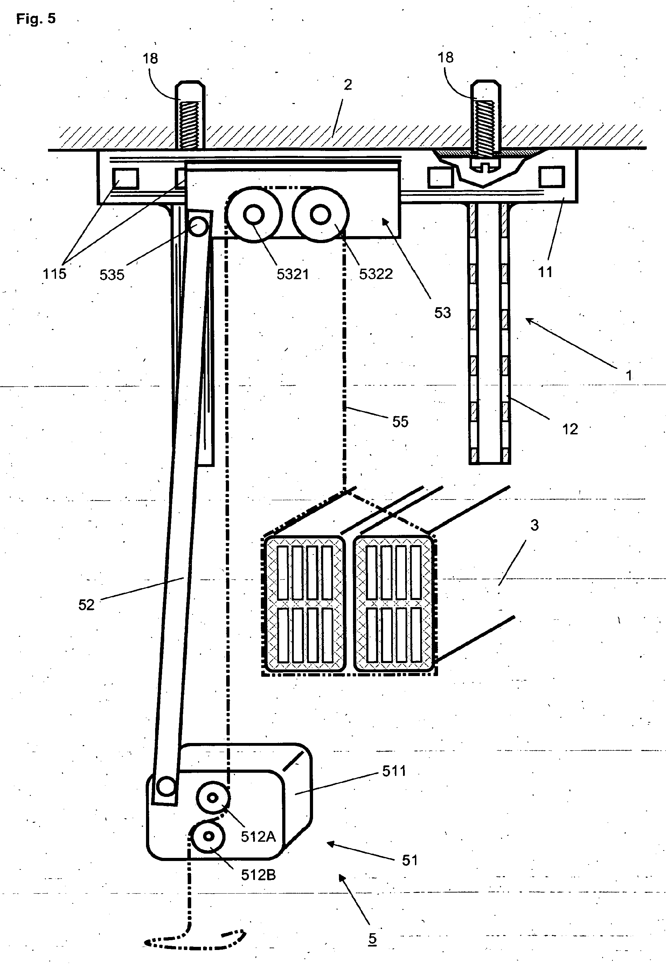

Figur 5 zeigt die Hebevorrichtung 5 von Figur 3 mit einer elektrischen Antriebsvorrichtung 51, mittels der das Zugelement 55 zwischen zwei Rädern durchgezogen, jedoch nicht auf eine Rolle aufgewickelt wird. Beispielsweise sind Seil- oder Kettenzüge einsetzbar, die auch in der Bühnentechnik verwendet werden. Verwendbar ist beispielsweise die Seilwinde SW E 7 oder ein Pfaff Kettenhebezug PE 25/50/100, ... der Pfaffsilberblau Hebezeugfabrik GmbH, Äußere Industriestraße 18, 86316 Friedberg/Derching.

Die Figuren 6a und 6b zeigen die oben beschriebene Verbindung eines vorteilhaft ausgestalteten Kopfstücks 53 mit einem Profilstück 11 der Befestigungsvorrichtung 1.

Die Figuren 7a-7c zeigen ein aus zwei Teilen 531A und 531B bestehendes Kopfstück 53. Das erste Teil 531A, das mit der Befestigungsvorrichtung 1 verbindbar ist, und das zweite Teil 531B, das die Umlenkrollen trägt, weisen dabei Kopplungselemente 538A bzw. 531B auf, die ineinander eingehängt werden können, wie dies in Figur 7c gezeigt ist. In gekoppeltem Zustand können die beiden Teile 531A und 531B gegeneinander verschoben werden, ohne dass sich die Verbindung löst. Damit ein gegenseitiges Verschieben auch unter Last leicht möglich ist, werden vorzugsweise Lagerelemente wie Gleit-, Kugel und/oder Magnetlager vorgesehen. Das Mass der Verschiebbarkeit von einem Justierbereich zu einem grösseren Verschiebebereich, der es erlaubt, eine angehobene Stromschiene 3 über einen Ausleger zu verschieben, kann daher beliebig gewählt werden.

Die erfindungsgemässen Hebevorrichtung 5 wurde in bevorzugten Ausgestaltungen beschrieben und dargestellt. Anhand der erfindungsgemässen Ideen sind jedoch weitere fachmännische Ausgestaltungen realisierbar. Insbesondere ist die Hebevorrichtung 5 bei beliebigen Befestigungsvorrichtungen einsetzbar, wie sie beispielsweise in [3] beschrieben sind. Gegebenenfalls sind dabei die Verbindungselemente der Hebevorrichtung an die entsprechenden Vorrichtungsteile der Befestigungsvorrichtung anzupassen. Ebenso kann die Ausgestaltung der erfindungsgemässen Hebevorrichtung, insbesondere der einzelnen Vorrichtungsteile 51, 52, 53 in fachmännischer Weise verändert werden. Dabei werden vorzugsweise standardmässige Profilteile verwendet, die auf dem Markt kostengünstig angeboten werden. Insbesondere sind auch verschiedenartige Ausgestaltungen der Verbindungsteile, Verbindungs- und Kupplungsvorrichtungen in fachmännischer Weise wählbar und realisierbar.

Literaturverzeichnis
[1] Produktkatalog "Niederspannungs-Schienenverteiler LANZ HE 2.5.2" der LANZ OENSINGEN AG vom März 2000
[2] "MULTIFIX" Produktkatalog der LANZ OENSINGEN AG vom August 2001
[3] EP 1 589 627

## Patentansprüche

1. Hebevorrichtung (5) für wenigstens eine Stromschiene (3), die in einer Befestigungsvorrichtung (1) zu installieren ist, welche eine mit der Decke (2) eines Gebäudes verbindbare Haltevorrichtung (11, 12) und ein dem Tragen wenigstens einer Stromschiene (3) dienendes Tragelement (13) aufweist, mit einem von einer Antriebsvorrichtung (51) anziehbaren Zugelement (55), mittels dessen wenigstens eine damit gehaltene Stromschiene (3) gegen die Haltevorrichtung (11, 12) gezogen werden kann, **dadurch gekennzeichnet, dass** ein Kopfstück (53) vorgesehen ist, das mittels Verbindungselementen (533) mit der Befestigungsvorrichtung (1) verbindbar ist und das wenigstens eine Umlenkrolle (5321, 5322) aufweist, über die das Zugelement (55) umlenkbar ist, und dass wenigstens eine Hilfsvorrichtung (52, 520) vorgesehen ist, die mit der Antriebsvorrichtung (51) und dem Kopfstück (53) lösbar verbunden ist, mittels der die beim Anheben der Stromschiene (3) über das Zugelement (55) auf die Antriebsvorrichtung (51) einwirkende Kraft (F1) kompensierbar ist.

2. Hebevorrichtung (5) nach Anspruch 1, **dadurch gekennzeichnet, dass** die Hilfsvorrichtung (52) ein metallischer Körper ist, der durch Montagemittel (534, 535, 523; 521, 5111) einerseits mit dem Kopfstück (53) und andererseits mit der Antriebsvorrichtung (51) fest, gelenkig oder gelenkig und mittels eines Halteelements fixierbar verbunden ist.

3. Hebevorrichtung (5) nach Anspruch 2, **dadurch gekennzeichnet, dass** die Hilfsvorrichtung (52) ein rechteckiges oder rundes Profil, vorzugsweise ein der Durchführung des Zugelements (55) dienendes Hohlprofil aufweist und/oder dass die Hilfsvorrichtung (52) teleskopartig ausziehbar ist.

4. Hebevorrichtung (5) nach einem der Ansprüche 1-3, **dadurch gekennzeichnet, dass** das Kopfstück (53) mit vorzugsweise zwei stab- oder hakenförmigen Verbindungselementen (533) versehen ist, die je durch wenigstens eine Öffnung (115) eines Profilstücks (11) der Befestigungsvorrichtung (1) durchführbar sind oder dass das Kopfstück (53) mit einem Kopplungselement versehen ist, mit dem ein dazu korrespondierendes Kopplungselement (538A) des Profilstücks (11) koppelbar ist.

5. Hebevorrichtung (5) nach Anspruch 4, **dadurch gekennzeichnet, dass** die Verbindungselemente (533) eine Ausnehmung (3331) aufweisen, in die der Rand der gegebenenfalls ersten Öffnung (115) des Profilstücks (11) einsenkbar ist.

6. Hebevorrichtung (4) nach einem der Ansprüche 1-5, **dadurch gekennzeichnet, dass** das Kopfstück (53) .ein erstes mit den Verbindungselementen (533) und ein weites mit der Umlenkrolle (5321, 5322) versehenes Teil (531A, 531B) aufweist, die mit Kopplungselementen (538A, 538B) versehen sind.

7. Hebevorrichtung (5) nach Anspruch 6, **dadurch gekennzeichnet, dass** die miteinander gekoppelten Kopplungselemente (538A, 538B) in belastetem oder unbelastetem Zustand seitlich gegeneinander verschiebbar sind, um die Stromschiene (3) in die Montageposition zu justieren oder um die angehobene Stromschiene (3) seitlich, gegebenenfalls über einen Ausleger, in die montageposition zu fahren.

8. Hebevorrichtung (5) nach einem der Ansprüche 1-7, **dadurch gekennzeichnet, dass** das von der Antriebsvorrichtung (51) entfernte Ende des Zugelements (55) mit einer Tragvorrichtung (56) verbunden ist, mittels dessen wenigstens eine Stromschiene erfasst werden kann.

9. Hebevorrichtung (5) nach einem der Ansprüche 1-8, **dadurch gekennzeichnet, dass** die Antriebsvorrichtung (51) manuell betreibbar oder mit einem Antriebsmotor versehen ist und/oder dass das Zugelement (55) ein Seil oder eine Kette ist.

## Claims

1. Lifting device (5) for at least one busbar(3), which is to be installed in a fixing device (1), which comprises a supporting device (11, 12) that is connectable to the ceiling (2) of a building and a supporting element (13) serving for supporting the busbar (3), with a traction element (55), which can be drawn by a drive device (51) and with which at least one busbar (3) held therewith can be drawn towards the supporting device (11, 12), **characterised in that** a head piece (53) is provided that by means of connecting elements (533) is connectable to the fixing device (1) and that comprises at least one deflection pulley (5321, 5322) via which the tension element (55) is deflectable, and that at least one auxiliary device (52, 520) is provided that is releasably connected to the drive device (51) and to the head piece (53), and with which the force (F1) can be compensated that acts via the traction element (55) onto the drive device (51) when the busbar (3) is lifted.

2. Lifting device (5) according to claim 1, **characterised in that** the auxiliary device (52) is a metallic body, which by means of mounting means (534, 535, 523; 521, 5111) is connected, firmly, articulated or articulated and fixable by means of a holding element, on one side with the head piece (53) and on the other side with the drive device (51).

3. Lifting device (5) according to claim 2, **characterised in that** the auxiliary device (52) comprises a rectangular or round profile, preferably a hollow profile serving for the lead-through of the traction element (55) and/or that the auxiliary device (52) is telescopically extendable.

4. Lifting device (5) according to one of the claims 1-3, **characterised in that** the head piece (53) is provided preferably with two rod shaped or hook-shaped connecting elements (533), which each can be transferred through at least one opening (115) of a profile piece (11) of the fixing device (1) or that the head piece (53) is provided with a coupling element, with which a thereto corresponding coupling element (538A) of the profile piece (11) can be coupled.

5. Lifting device (5) according to claim 4, **characterised in that** the connecting elements (533) comprise a recess (3331), into which, if appropriate, the edge of the first opening (115) of the profile piece (11) can be sunk.

6. Lifting device (4) according to one of the claims 1-5, **characterised in that** the head piece (53) comprises a first part (531A) that is provided with the connecting elements (533) and a further part (531B) that is connected to the deflection pulley (5321, 5322), which first and further part (531A, 531B) are provided with coupling elements (538A, 538B).

7. Lifting device (5) according to claim 6, **characterised in that** the coupling elements (538A, 538B) that are coupled with one another can laterally be shifted against one another in the loaded or unloaded condition, in order to adjust the busbar (3) in the mounting position or in order to laterally move an elevated busbar (3), if appropriate over a bracket, into the mounting position.

8. Lifting device (5) according to one of the claims 1-7, **characterised in that** the end of the traction element (55) distal to the drive device (51) is connected to a bearing device (56), with which at least one busbar can be held.

9. Lifting device (5) according to one of the claims 1-8, **characterised in that** the drive device (51) can manually be operated or is provided with a drive motor and/or that the traction element (55) is a rope or a chain.

## Revendications

1. Dispositif de levage (5) pour au moins une barre de bus (3), qui doit être installé dans un dispositif de fixation (1), qui présente au moins un dispositif de retenue (11, 12) reliable au plafond (2) d'un bâtiment et un élément support (13) servant à porter au moins une barre de bus (3), avec un élément de traction (55) pouvant être tiré par un dispositif d'entraînement (51), élément au moyen duquel au moins une barre de bus (3) est maintenu contre le dispositif de retenue (11, 12), **caractérisé en ce qu'**une pièce de tête (53) est prévue qui est reliable au moyen d'éléments de liaison (533) au dispositif de fixation (1) et qui présente au moins une poulie de renvoi (5321, 5322) par laquelle peut être dévié l'élément de traction (55) et **en ce qu'**il est prévu au moins un dispositif auxiliaire (52, 520) qui est relié de manière amovible au dispositif d'entraînement (51) et à la pièce de tête (53) et au moyen duquel il est possible de compenser la force (F1) agissant sur le dispositif d'entraînement (51) lors du soulèvement de la barre de bus (3) au-dessus de l'élément de traction (55).

2. Dispositif de levage (5) selon la revendication 1, **caractérisé en ce que** le dispositif auxiliaire (52) est un corps métallique qui est relié par des moyens de montage (534, 535, 523; 521, 5111) d'une part à la pièce de tête (53) et d'autre part au dispositif d'entraînement (51), de manière fixe, articulée ou articulée et fixable au moyen d'un élément de retenue.

3. Dispositif de levage (5) selon la revendication 1, **caractérisé en ce que** le dispositif auxiliaire (52) présente un profilé rond ou rectangulaire, de préférence un profilé creux servant au passage de l'élément de traction (55) et/ou **en ce que** le dispositif auxiliaire (52) est extractible de manière télescopique.

4. Dispositif de levage (5) selon l'une des revendications 1 à 3, **caractérisé en ce que** la pièce de tête (53) est mugie de deux éléments de liaison (533) en forme de crochet ou de bâton, qui peuvent être passés chacun par au moins une ouverture (115) d'une pièce de profilé (11) du dispositif de fixation (1) ou **en ce que** la pièce de tête (53) est munie d'un élément d'accouplement avec lequel un élément d'accouplement (538A) correspondant de la pièce de profilé (11) peut être accouplé.

5. Dispositif de levage (5) selon la revendication 4, **caractérisé en ce que** les éléments de liaison (533) présentent un évidement (3331) dans lequel peut être introduit le bord d'éventuellement la première ouverture (115) de la pièce de profilé (11).

6. Dispositif de levage (5) selon l'une des revendications 1 à 5, **caractérisé en ce que** la pièce de tête (53) présente une première partie (531A, 531B) munie des éléments de liaison (533) et d'une partie munie de la poulie de renvoi (5321, 5322), les parties étant munies d'éléments d'accouplement (538A 538B)

7. Dispositif de levage (5) selon la revendication 6, **caractérisé en ce que** les éléments d'accouplement (538A, 538B) accouplés entre eux sont déplaçables l'un par rapport à l'autre à l'état chargé ou non chargé, pour ajuster les barres de bus (3) dans la position de montage ou amener la barre de bus (3) soulevé latéralement, éventuellement par une flèche, dans la position de montage.

8. Dispositif de levage (5) selon l'une des revendications 1 à 7, **caractérisé en ce que** l'extrémité de l'élément de traction (55) éloignée du dispositif d'entraînement (51) est relié à un dispositif porteur (56) au moyen duquel peut être saisi au moins une barre de bus.

9. Dispositif de levage (5) selon l'une des revendications 1 à 7, **caractérisé en ce que** le dispositif d'entraînement (51) est entraînable manuellement ou est muni d'un moteur d'entraînement et/ou **en ce que** l'élément de traction (55) est un câble ou une chaîne.
